# FASCICULE DE BREVET EUROPEEN

(11) **EP 2 516 549 B1**
(45) Date de publication et mention de la délivrance du brevet: **07.11.2018**
(21) Numéro de dépôt: 10803081.8
(22) Date de dépôt: 21.12.2010
(51) Int. Cl.: C08L 53/00, C08L 53/02, B60C 5/14

(54) **BANDAGE PNEUMATIQUE POURVU D'UNE COUCHE ETANCHE AUX GAZ A BASE D'UN ELASTOMERE THERMOPLASTIQUE STYRENIQUE ET D'UN POLYPHENYLENE ETHER**
DRUCKLUFTREIFEN MIT GASUNDURCHLÄSSIGER SCHICHT MIT EINEM THERMOPLASTISCHEN STYROLELASTOMER UND EINEM POLYPHENYLEN-ETHER
PNEUMATIC TIRE PROVIDED WITH A GAS-TIGHT LAYER COMPRISING A STYRENE THERMOPLASTIC ELASTOMER AND A POLYPHENYLENE ETHER

(30) Priorité: 23.12.2009 FR 0959519
(43) Date de publication de la demande: 31.10.2012
(73) Titulaire: Compagnie Générale des Etablissements Michelin, 63000 Clermont-Ferrand (FR)
(72) Inventeur: ABAD, Vincent, F-63400 Chamalières (FR); CUSTODERO, Emmanuel, F-63400 Chamalières (FR); GREIVELDINGER, Marc, F-63140 Châtel Guyon (FR)
(74) Mandataire: Sidhu, Alban
(86) Numéro de dépôt international: PCT/EP2010/070406
(87) Numéro de publication internationale: WO 2011/076802

(56) Documents cités:
- EP-A1- 0 572 667
- EP-A1- 2 006 328
- WO-A1-2008/145277
- WO-A1-2009/123611
- US-A1- 2002 155 238

## Description

La présente invention est relative aux objets « pneumatiques », c'est-à-dire, par définition, aux objets qui prennent leur forme utilisable quand on les gonfle d'air ou d'un gaz de gonflage équivalent.

Elle se rapporte plus particulièrement aux couches étanches aux gaz assurant l'étanchéité de ces objets pneumatiques, en particulier celle des bandages pneumatiques.

Dans un bandage pneumatique conventionnel du type « tubeless » (c'est-à-dire sans chambre à air), la face radialement interne comporte une couche étanche à l'air (ou plus généralement à tout gaz de gonflage) qui permet le gonflement et le maintien sous pression du bandage pneumatique. Ses propriétés d'étanchéité lui permettent de garantir un taux de perte de pression relativement faible, permettant de maintenir le bandage gonflé en état de fonctionnement normal pendant une durée suffisante, normalement de plusieurs semaines ou plusieurs mois. Elle a également pour fonction de protéger l'armature de carcasse et plus généralement le reste du pneumatique d'un risque d'oxydation dû à la diffusion d'air provenant de l'espace intérieur au bandage.

Cette fonction de couche interne ou « gomme intérieure » (*"inner liner")* étanche est aujourd'hui remplie par des compositions à base de caoutchouc butyl (copolymère d'isobutylène et d'isoprène), reconnues depuis fort longtemps pour leurs excellentes propriétés d'étanchéité.

Toutefois, un inconvénient bien connu des compositions à base de caoutchouc ou élastomère butyl est qu'elles présentent des pertes hystérétiques importantes, qui plus est sur un spectre large de température, inconvénient qui pénalise la résistance au roulement des bandages pneumatiques.

Diminuer l'hystérèse de ces couches internes d'étanchéité et donc in fine la consommation de carburant des véhicules automobiles, est un objectif général auquel se heurte la technologie actuelle.

Le document WO 2008/145277 des Demanderesses divulgue un objet pneumatique pourvu d'une couche étanche aux gaz de gonflage, dans lequel la couche étanche comporte une composition élastomère comprenant au moins un élastomère thermoplastique copolymère à blocs polystyrène et polyisobutylène et une huile polybutène.

Comparativement à un caoutchouc butyl, l'élastomère TPS présente l'avantage majeur, en raison de sa nature thermoplastique, de pouvoir être travaillé tel quel à l'état fondu (liquide), et par conséquent d'offrir une possibilité de mise en oeuvre simplifiée.

Cependant, dans certaines sollicitations en roulage, la tenue thermique d'une telle couche étanche à base d'élastomère TPS peut se révéler insuffisante, notamment à température élevée et sous contrainte.

L'invention a pour objet un bandage pneumatique pourvu d'une couche élastomère étanche aux gaz de gonflage comportant au moins un élastomère thermoplastique styrénique à bloc polyisobutylène. Cet bandage pneumatique est caractérisé en ce que la couche élastomère étanche comprend en plus un polyphénylène éther (« PPE »).

Les Demanderesses ont découvert que la présence d'un polyphénylène éther permet d'améliorer sensiblement la tenue thermique de la composition élastomère étanche aux gaz et notamment sa résistance au fluage sous contrainte à température élevée.

Les couches étanches aux gaz des bandages pneumatiques selon l'un des objets de l'invention présentent aussi l'avantage d'avoir une étanchéité aux gaz améliorée substantiellement.

L'invention concerne plus particulièrement les bandages pneumatiques destinés à équiper des véhicules à moteur de type tourisme, SUV (*"Sport Utility Vehicles"*), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

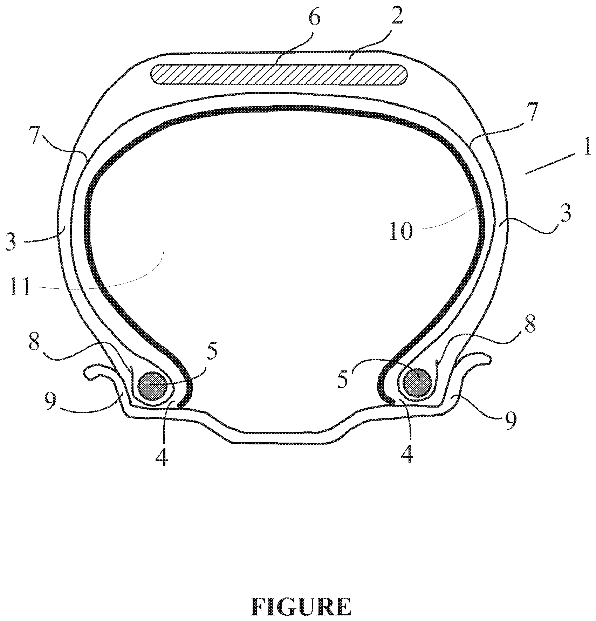

L'invention ainsi que ses avantages seront aisément compris à la lumière de la description et des exemples de réalisation qui suivent, ainsi que de la figure unique relative à ces exemples qui schématise, en coupe radiale, un bandage pneumatique conforme à l'invention.

### I. DESCRIPTION DETAILLEE DE L'INVENTION

Dans la présente description, l'expression pce veut dire partie en poids pour cent parties d'élastomère total (si plusieurs élastomères sont présents) et, sauf indication expresse différente, tous les pourcentages (%) indiqués sont des % en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

### I-1. Couche élastomère étanche aux gaz

La couche élastomère étanche aux gaz de l'objet pneumatique selon l'invention a pour caractéristique essentielle de comporter au moins un élastomère thermoplastique styrénique à bloc élastomère polyisobutylène et un polyphénylène éther en proportions données.

### I-1-A. Élastomère thermoplastique styrénique à blocs polyisobutylène

Les élastomères thermoplastiques (en abrégé « TPE ») ont une structure intermédiaire entre polymères thermoplastiques et élastomères. Ils sont constitués de séquences rigides thermoplastiques reliées par des séquences souples élastomères, par exemple polybutadiène, polyisoprène, poly(éthylène/butylène), ou encore polyisobutylène. Ce sont souvent des élastomères triblocs avec deux segments rigides reliés par un segment souple. Les segments rigides et souples peuvent être disposés linéairement, en étoile ou branchés. Typiquement, chacun de ces segments ou blocs contient au minimum plus de 5, généralement plus de 10 unités de base (par exemple unités styrène et unités isoprène pour un copolymère blocs styrène/ isoprène/ styrène).

L'élastomère thermoplastique selon un objet de l'invention est caractérisé en ce qu'il est choisi parmi les élastomères thermoplastiques styréniques (« TPS »). Par monomère styrénique doit être entendu dans la présente description tout monomère à base de styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

L'élastomère thermoplastique styrénique selon l'invention comporte un bloc élastomère à base de polyisobutylène (en abrégé « TPSI »). Par bloc élastomère à base de polyisobutylène, on entend non seulement un homopolymère d'isobutylène mais aussi un copolymère d'isobutylène et d'isoprène ainsi que les dérivés halogénés, en particulier généralement bromés ou chlorés, de ces homopolymères et copolymères.

De préférence, l'élastomère thermoplastique styrénique est un copolymère à blocs polystyrène et polyisobutylène. Par une telle définition doit être entendu tout copolymère thermoplastique comportant au moins un bloc polystyrène (c'est-à-dire un ou plusieurs blocs polystyrène) et au moins un bloc polyisobutylène (c'est-à-dire un ou plusieurs blocs polyisobutylène), auxquels peuvent être associés ou non d'autres blocs (par exemple polyéthylène et/ou polypropylène) et/ou d'autres unités monomères (par exemple des unités insaturées telles que diéniques).

Préférentiellement, un tel copolymère blocs est un copolymère dibloc styrène/ isobutylène (en abrégé « SIB »).

Plus préférentiellement encore, un tel copolymère blocs est un copolymère tribloc styrène/ isobutylène/ styrène (en abrégé « SIBS »).

Selon un mode de réalisation préférentiel de l'invention, le taux pondéral de styrène, dans l'élastomère thermoplastique styrénique est compris entre 5% et 50%. En dessous du minimum indiqué, le caractère thermoplastique de l'élastomère risque de diminuer de manière sensible tandis qu'au-dessus du maximum préconisé, l'élasticité de la couche étanche peut être affectée. Pour ces raisons, le taux de styrène est plus préférentiellement compris entre 10 et 40%, en particulier entre 15 et 35%.

On préfère que la température de transition vitreuse (Tg, mesurée selon ASTM D3418) de l'élastomère TPSI soit inférieure à - 20°C, plus préférentiellement inférieure à - 40°C. Une valeur de Tg supérieure à ces minima peut diminuer les performances de la couche étanche lors d'une utilisation à très basse température ; pour une telle utilisation, la Tg de l'élastomère TPSI est plus préférentiellement encore inférieure à - 50°C.

La masse moléculaire moyenne en nombre (notée Mn) de l'élastomère TPSI est préférentiellement comprise entre 30 000 et 500 000 g/mol, plus préférentiellement comprise entre 40 000 et 400 000 g/mol. En dessous des minima indiqués, la cohésion entre les chaînes de l'élastomère, notamment en raison de l'éventuelle dilution de ce dernier par une huile d'extension, risque d'être affectée ; d'autre part, une augmentation de la température d'usage risque d'affecter les propriétés mécaniques, notamment les propriétés à la rupture, avec pour conséquence une performance diminuée « à chaud ». Par ailleurs, une masse Mn trop élevée peut être pénalisante pour la souplesse de la couche étanche aux gaz. Ainsi, on a constaté qu'une valeur comprise dans un domaine de 50 000 à 300 000 g/mol était particulièrement bien adaptée, notamment à une utilisation de la composition dans un bandage pneumatique.

La masse moléculaire moyenne en nombre (Mn) de l'élastomère TPSI est déterminée de manière connue, par chromatographie d'exclusion stérique (SEC). L'échantillon est préalablement solubilisé dans du tétrahydrofurane à une concentration d'environ 1 g/l ; puis la solution est filtrée sur filtre de porosité 0,45 µm avant injection. L'appareillage utilisé est une chaîne chromatographique « WATERS alliance ». Le solvant d'élution est le tétrahydrofurane, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

L'indice de polydispersité Ip (rappel : Ip = Mw/Mn avec Mw masse moléculaire moyenne en poids) de l'élastomère TPSI est de préférence inférieur à 3 ; plus préférentiellement Ip est inférieur à 2.

Si d'éventuels autres élastomères sont utilisés dans la couche étanche aux gaz, l'élastomère thermoplastique styrénique à bloc polyisobutylène constitue l'élastomère majoritaire en poids ; il représente alors de préférence plus de 50%, plus préférentiellement plus de 70% en poids de l'ensemble des élastomères présents dans la couche étanche aux gaz. De tels élastomères complémentaires, minoritaires en poids, pourraient être par exemple des élastomères diéniques tels que du caoutchouc naturel ou un polyisoprène synthétique, un caoutchouc butyl ou des élastomères thermoplastiques autres que styréniques.

L'élastomère thermoplastique styrénique à bloc polyisobutylène est préférentiellement le seul élastomère thermoplastique constituant de la couche élastomère étanche aux gaz.

Les élastomères TPSI peuvent être mis en oeuvre de façon classique, par extrusion ou moulage, par exemple à partir d'une matière première disponible sous la forme de billes ou de granulés.

Les élastomères TPSI sont disponibles commercialement, vendus par exemple en ce qui concerne les SIB et SIBS par la société KANEKA sous la dénomination « SIBSTAR » (e.g. "Sibstar 103T", "Sibstar 102T", "Sibstar 073T" ou "Sibstar 072T" pour les SIBS, "Sibstar 042D" pour les SIB). Ils ont par exemple été décrits, ainsi que leur synthèse, dans les documents brevet EP 731 112, US 4 946 899, US 5 260 383. Ils ont été développés tout d'abord pour des applications biomédicales puis décrits dans diverses applications propres aux élastomères TPSI, aussi variées que matériel médical, pièces pour automobile ou pour électroménager, gaines pour fils électriques, pièces d'étanchéité ou élastiques (voir par exemple EP 1 431 343, EP 1 561 783, EP 1 566 405, WO 2005/103146).

### I-1-B. Polyphénylène éther (PPE)

La composition étanche aux gaz a pour autre caractéristique essentielle de comporter, en combinaison avec l'élastomère TPSI précédemment décrit, au moins un polyphénylène éther (noté en abrégé « PPE »).

Les PPE sont bien connus de l'homme du métier, ce sont des résines solides à température ambiante (23°C) compatibles avec les polymères styréniques, qui sont notamment utilisées pour augmenter la Tg d'élastomères TPS (voir par exemple *"*Thermal, Mechanical and Morphological Analyses of Poly(2,6- dimethyl-1,4-phenylene oxide)/Styrene- Butadiene-Styrene Blends", Tucker, Barlow and Paul, Macromolecules, 1988, 21, 1678- 1685).

Préférentiellement, le PPE utilisé ici possède une température de transition vitreuse (notée ci-après Tg) qui est supérieure à 150°C, plus préférentiellement supérieure à 180°C. Quant à sa masse moléculaire moyenne en nombre (Mn), elle est préférentiellement comprise entre 5 000 et 100 000 g/mol.

La masse moléculaire moyenne en nombre (Mn) est déterminée de manière connue, par chromatographie d'exclusion stérique (SEC). L'échantillon est préalablement solubilisé dans du tétrahydrofurane à une concentration d'environ 1 g/l ; puis la solution est filtrée sur filtre de porosité 0,45 µm avant injection. L'appareillage utilisé est une chaîne chromatographique "WATERS alliance". Le solvant d'élution est le tétrahydrofurane, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

A titres d'exemples non limitatifs de polymères PPE utilisables dans la composition étanche selon un objet de l'invention, on peut citer notamment ceux choisis dans le groupe constitué par les poly(2,6-diméthyl-1,4-phénylène-éther), poly(2,6-diméthyl-co-2,3,6-triméthyl-1,4- phénylène-éther), poly-(2,3,6-triméthyl-1,4- phénylène-éther), poly(2,6-diéthyl-1,4-phénylène-éther), poly(2-méthyl-6-éthyl-1,4- phénylène-éther), poly(2-méthyl-6-propyl- 1,4-phénylène-éther), poly-(2,6-dipropyl-1,4- phénylène-éther), poly(2-éthyl-6-propyl-1,4- phénylène-éther), poly(2,6-dilauryl-1,4- phénylène-éther), poly(2,6-diphényl-1,4- phénylène-éther), poly(2,6-diméthoxy-1,4- phénylène-éther), poly(1,6-diéthoxy-1,4- phénylène-éther), poly(2-méthoxy-6-éthoxy- 1,4-phénylène-éther), poly(2-éthyl-6- stéaryloxy-1,4-phénylène-éther), poly(2,6- dichloro-1,4-phénylène-éther), poly(2-méthyl- 6-phényl-1,4-phénylène-éther), poly(2- éthoxy-1,4-phénylène-éther), poly(2-chloro- 1,4-phénylène-éther), poly(2,6-dibromo-1,4- phénylène-éther), poly(3-bromo-2,6-diméthyl- 1,4-phénylène-éther), leurs copolymères respectifs, et les mélanges de ces homopolymères ou copolymères.

Selon un mode de réalisation particulier et préférentiel, le PPE utilisé est le poly(2,6- diméthyl-1,4-phénylène-éther). De tels PPE commercialement disponibles sont par exemple les « Xyron S202 » de la société Asahi Kasei, ou « Noryl SA120 » de la société Sabic.

De préférence, dans la couche étanche aux gaz, la quantité de polymère PPE est ajustée de telle manière que le taux pondéral de PPE soit compris entre 0,05 et 5 fois, plus préférentiellement entre 0,1 et 2 fois le taux pondéral de styrène présent dans l'élastomère thermoplastique styrénique à bloc polyisobutylène lui-même. En dessous des minima préconisés, il n'y a pas d'effet visible de la présence de PPE et au-delà de 5 fois, on constate une augmentation trop forte de la rigidité de la couche étanche aux gaz.

Pour toutes ces raisons, le taux pondéral de PPE est plus préférentiellement encore compris entre 0,2 et 1,5 fois le taux pondéral de styrène dans l'élastomère thermoplastique styrénique à bloc polyisobutylène.

### I-1-C. Huile d'extension

L'élastomère précédent additionné de polyphénylène éther sont suffisants à eux seuls pour que soient remplies les fonctions d'étanchéité aux gaz et d'amélioration de la tenue thermique vis-à-vis des objets pneumatiques dans lesquels ils sont utilisés.

Toutefois, selon un mode de réalisation préférentiel de l'invention, la couche étanche aux gaz précédemment décrite comporte également, à titre d'agent plastifiant, une huile d'extension (ou huile plastifiante) dont la fonction est de faciliter la mise en oeuvre de la couche étanche aux gaz, particulièrement son intégration dans l'objet pneumatique par un abaissement du module et une augmentation du pouvoir tackifiant.

On peut utiliser toute huile d'extension, de préférence à caractère faiblement polaire, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

On utilise préférentiellement une huile du type polybutène, en particulier une huile polyisobutylène (en abrégé « PIB »), qui a démontré le meilleur compromis de propriétés comparativement aux autres huiles testées, notamment à une huile conventionnelle du type paraffinique.

A titre d'exemples, des huiles polyisobutylène sont commercialisées notamment par la société UNIVAR sous la dénomination « Dynapak Poly » (e.g. « Dynapak Poly 190 »), par INEOS Oligomer sous la dénomination « Indopol H1200 »), par BASF sous les dénominations « Glissopal » (e.g. « Glissopal 1000 ») ou « Oppanol » (e.g. « Oppanol B12 ») ; des huiles paraffiniques sont commercialisées par exemple par EXXON sous la dénomination «Telura 618 » ou par Repsol sous la dénomination « Extensol 51 ».

La masse moléculaire moyenne en nombre (Mn) de l'huile d'extension est préférentiellement comprise entre 200 et 25 000 g/mol, plus préférentiellement encore comprise entre 300 et 10 000 g/mol. Pour des masses Mn trop basses, il existe un risque de migration de l'huile à l'extérieur de la composition, tandis que des masses trop élevées peuvent entraîner une rigidification excessive de cette composition. Une masse Mn comprise entre 350 et 4 000 g/mol, en particulier entre 400 et 3 000 g/mol, s'est avérée constituer un excellent compromis pour les applications visées, en particulier pour une utilisation dans un bandage pneumatique.

La masse moléculaire moyenne en nombre (Mn) de l'huile d'extension est déterminée par SEC, l'échantillon étant préalablement solubilisé dans du tétrahydrofuranne à une concentration d'environ 1 g/l ; puis la solution est filtrée sur filtre de porosité 0,45µm avant injection. L'appareillage est la chaîne chromatographique « WATERS alliance ». Le solvant d'élution est le tétrahydrofuranne, le débit de 1 ml/min, la température du système de 35°C et la durée d'analyse de 30 min. On utilise un jeu de deux colonnes « WATERS » de dénomination « STYRAGEL HT6E ». Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

L'homme du métier saura, à la lumière de la description et des exemples de réalisation qui suivent, ajuster la quantité d'huile d'extension en fonction des conditions particulières d'usage de la couche élastomère étanche aux gaz, notamment de l'objet pneumatique dans lequel elle est destinée à être utilisée.

On préfère que le taux d'huile d'extension soit supérieur à 5 pce, de préférence compris entre 5 et 150 pce.

En dessous du minimum indiqué, la présence d'huile d'extension n'est pas sensible. Au-delà du maximum préconisé, on s'expose à un risque de cohésion insuffisante de la composition et de perte d'étanchéité pouvant être néfaste selon l'application considérée.

Pour ces raisons, en particulier pour une utilisation de la composition étanche dans un bandage pneumatique, on préfère que le taux d'huile d'extension soit supérieur à 10 pce, notamment compris entre 10 et 130 pce, plus préférentiellement encore qu'il soit supérieur à 20 pce, notamment compris entre 20 et 100 pce.

### I-1-D. Charge lamellaire

L'utilisation de charge lamellaire permet avantageusement d'abaisser le coefficient de perméabilité (donc d'augmenter l'étanchéité) de la composition élastomère, sans augmenter de façon excessive son module, ce qui permet de conserver la facilité d'intégration de la couche étanche dans l'objet pneumatique.

Les charges dites lamellaires (en anglais *"platy fillers"*) sont bien connues de l'homme du métier. Elles ont été utilisées notamment dans des bandages pneumatiques pour réduire la perméabilité des couches étanches aux gaz conventionnelles à base de caoutchouc butyl. Dans ces couches à base de butyl, elles sont généralement utilisées à des taux relativement faibles, n'excédant pas le plus souvent 10 à 15 pce (voir par exemple les documents brevet US 2004/0194863, WO 2006/047509).

Elles se présentent généralement sous forme de plaques, plaquettes, feuilles ou feuillets empilés, avec une anisométrie plus ou moins marquée. Leur rapport de forme (F = L/E) est généralement supérieur à 3, plus souvent supérieur à 5 ou à 10, L représentant la longueur (ou plus grande dimension) et E l'épaisseur moyenne de ces charges lamellaires, ces moyennes étant calculées en nombre. Des rapports de forme atteignant plusieurs dizaines voire centaines sont fréquents. Leur longueur moyenne est de préférence supérieure à 1 µm (c'est-à-dire qu'il s'agit alors de charges lamellaires dites micrométriques), typiquement comprise entre quelques µm (par exemple 5 µm) et quelques centaines de µm (par exemple 500 voire 800 µm).

Préférentiellement, les charges lamellaires utilisées conformément à l'invention sont choisies dans le groupe constitué par les graphites, les phyllosilicates et les mélanges de telles charges. Parmi les phyllosilicates, on citera notamment les argiles, talcs, micas, kaolins, ces phyllosilicates pouvant être modifiés ou non par exemple par un traitement de surface ; à titre d'exemples de tels phyllosilicates modifiés, on peut citer notamment des micas recouverts d'oxyde de titane, des argiles modifiées par des tensioactifs (*"organo clays"*).

On utilise préférentiellement des charges lamellaires à faible énergie de surface, c'est-à-dire relativement apolaires, telles que celles choisies dans le groupe constitué par les graphites, les talcs, les micas et les mélanges de telles charges, ces dernières pouvant être modifiées ou non, plus préférentiellement encore dans le groupe constitué par les graphites, les talcs et les mélanges de telles charges. Parmi les graphites peuvent être cités notamment les graphites naturels, les graphites expansés ou les graphites synthétiques.

Comme exemples de micas, on peut citer les micas commercialisés par la société CMMP (Mica-MU®, Mica-Soft®, Briomica® par exemple), les vermiculites (notamment la vermiculite Shawatec® commercialisée par CMMP ou la vermiculite Microlite® commercialisée par W.R. Grace), les micas modifiés ou traités (par exemple, la gamme Iriodin® commercialisée par Merck, ceux commercialisés par la société YAMAGUCHI (A51S, A41S, SYA-21R, SYA-21RS, A21S, SYA-41R)). Comme exemples de graphites, on peut citer les graphites commercialisés par la société Timcal (gamme Timrex®). Comme exemple de talcs, on peut citer les talcs commercialisés par la société Luzenac.

Les charges lamellaires décrites ci-dessus peuvent être utilisées à des taux variables, notamment compris entre 2 et 30 % en volume de composition élastomère, et de préférence entre 3 et 20 % en volume.

L'introduction des charges lamellaires dans la composition thermoplastique élastomère peut être réalisée selon divers procédés connus, par exemple par mélangeage en solution, par mélangeage en masse dans un mélangeur interne, ou encore par mélangeage par extrusion.

### I-1-E. Additifs divers

La couche ou composition étanche à l'air décrite précédemment peut comporter par ailleurs les divers additifs usuellement présents dans les couches étanches à l'air connues de l'homme du métier. On citera par exemple des charges renforçantes telles que du noir de carbone ou de la silice, des charges non renforçantes ou inertes autres que les charges lamellaires précédemment décrites, des agents colorants avantageusement utilisables pour la coloration de la composition, des plastifiants autres que les huiles d'extension précitées, des résines tackifiantes, des agents de protection tels que antioxydants ou antiozonants, anti-UV, divers agents de mise en oeuvre ou autres stabilisants, ou encore des promoteurs aptes à favoriser l'adhésion au reste de la structure de l'objet pneumatique.

Outre les élastomères précédemment décrits, la composition étanche aux gaz pourrait aussi comporter, toujours selon une fraction pondérale minoritaire par rapport à l'élastomère blocs, des polymères autres que des élastomères, tels que par exemple des polymères thermoplastiques

### I-2. Utilisation de la couche étanche à l'air dans un bandage pneumatique

La composition à base d'élastomère blocs précédemment décrite est utilisable comme couche étanche à l'air dans tout type d'objet pneumatique. A titre d'exemples de tels objets pneumatiques, on peut citer les bateaux pneumatiques, les ballons ou balles utilisées pour le jeu ou le sport.

Elle est particulièrement bien adaptée à une utilisation comme couche étanche à l'air (ou tout autre gaz de gonflage, par exemple azote) dans un objet pneumatique, produit fini ou semi-fini, en caoutchouc, tout particulièrement dans un bandage pneumatique pour véhicule automobile tel qu'un véhicule de type deux roues, tourisme ou industriel.

Une telle couche étanche à l'air est préférentiellement disposée sur la paroi interne de l'objet pneumatique, mais elle peut être également intégrée complètement à sa structure interne.

L'épaisseur de la couche étanche à l'air est préférentiellement supérieure à 0,05 mm, plus préférentiellement comprise entre 0,1 mm et 10 mm, notamment entre 0,1 et 1,0 mm.

On comprendra aisément que, selon les domaines d'application spécifiques, les dimensions et les pressions en jeu, le mode de mise en oeuvre de l'invention peut varier, la couche étanche à l'air comportant alors plusieurs gammes d'épaisseur préférentielles.

Ainsi par exemple, pour des bandages pneumatiques de type tourisme, elle peut avoir une épaisseur d'au moins 0,05 mm, préférentiellement comprise entre 0,1 et 2 mm. Selon un autre exemple, pour des bandages pneumatiques de véhicules poids-lourd ou agricole, l'épaisseur préférentielle peut se situer entre 1 et 3 mm. Selon un autre exemple, pour des bandages pneumatiques de véhicules dans le domaine du génie civil ou pour avions, l'épaisseur préférentielle peut se situer entre 2 et 10 mm.

Comparativement à une couche étanche à l'air telle que divulguée dans le document WO 2008/145277 A1, la couche étanche à l'air selon l'invention a l'avantage d'avoir une résistance thermique nettement améliorée ainsi qu'une étanchéité aux gaz elle-aussi améliorée, comme cela est démontré dans les exemples de réalisation qui suivent.

### II. EXEMPLES DE RÉALISATION DE L'INVENTION

La couche étanche aux gaz précédemment décrite est avantageusement utilisable dans les bandages pneumatiques de tous types de véhicules, en particulier véhicules tourisme ou véhicules industriels tels que Poids-lourd.

A titre d'exemple, la figure unique annexée représente de manière très schématique (sans respect d'une échelle spécifique), une coupe radiale d'un bandage pneumatique conforme à l'invention.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits « radiaux », par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

La paroi interne du bandage pneumatique 1 comporte une couche 10 étanche à l'air, par exemple d'épaisseur égale à environ 0,9 mm, du côté de la cavité interne 11 du bandage pneumatique 1.

Cette couche interne (ou *"inner liner"*) couvre toute la paroi interne du bandage pneumatique, se prolongeant d'un flanc à l'autre, au moins jusqu'au niveau du crochet de jante lorsque le bandage pneumatique est en position montée. Elle définit la face radialement interne dudit bandage destinée à protéger l'armature de carcasse de la diffusion d'air provenant de l'espace 11 intérieur au bandage. Elle permet le gonflement et le maintien sous pression du bandage pneumatique ; ses propriétés d'étanchéité doivent lui permettre de garantir un taux de perte de pression relativement faible, de maintenir le bandage gonflé, en état de fonctionnement normal, pendant une durée suffisante, normalement de plusieurs semaines ou plusieurs mois.

Contrairement à un bandage pneumatique conventionnel utilisant une composition à base de caoutchouc butyl, le bandage pneumatique conforme à l'invention utilise dans cet exemple, comme couche 10 étanche à l'air, une composition élastomère comportant un élastomère SIBS (« Sibstar 102T ou 103T » avec un taux de styrène de respectivement 15% et 30% environ, une Tg d'environ - 65°C et une Mn d'environ 90 000 g/mol) et un poly(2,6-diméthyl-1,4-phénylène-éther) (« Xyron®S202A commercialisé par Asahi Kasei ou "Noryl SA120" de la société Sabic) étendu avec une huile PIB (par exemple huile Indopol H1200 - Mn de l'ordre de 2100 g/mol), ainsi qu'une charge lamellaire (SYA41R de Yamaguchi).

Une couche (« *skim* ») de la couche étanche aux gaz peut être réalisée notamment avec le dispositif décrit dans le document EP 2 072 219 A1. Ce dispositif comporte un outil d'extrusion telle une extrudeuse bi-vis, une filière, un bain de refroidissement liquide et un support plan mobile.

Le pneumatique pourvu de sa couche étanche à l'air 10 tel que décrit ci-dessus peut être réalisé avant ou après vulcanisation (ou cuisson).

Dans le premier cas (i.e., avant cuisson du bandage pneumatique), la couche étanche à l'air est simplement appliquée de façon conventionnelle à l'endroit souhaité, pour formation de la couche 10. La vulcanisation du bandage pneumatique est ensuite effectuée classiquement.

Une variante de fabrication avantageuse, pour l'homme du métier des bandages pneumatiques, consistera par exemple au cours d'une première étape, à déposer à plat la couche étanche à l'air directement sur un tambour de confection, sous la forme d'une couche (*"skim"*) d'épaisseur adaptée, avant de recouvrir cette dernière avec le reste de la structure du bandage pneumatique, selon des techniques de fabrication bien connues de l'homme du métier.

Dans le second cas (i.e., après cuisson du bandage pneumatique), la couche étanche est appliquée à l'intérieur du bandage pneumatique cuit par tout moyen approprié, par exemple par collage, par pulvérisation ou encore extrusion et soufflage d'un film d'épaisseur appropriée.

### II-1. Tests

Les propriétés des compositions élastomères étanches aux gaz sont caractérisées comme indiqué ci-après.

### A Test de détermination d'une température de ramollissement thermique

Pour caractériser la température de ramollissement d'une composition, on utilise le test suivant :
- Appareillage : analyseur mécanique dynamique (DMA Q800) commercialisé par la société TA Instruments ;
- Echantillon : de forme cylindrique, il est réalisé au moyen d'un emporte pièce et mesure en moyenne 13 mm de diamètre pour une épaisseur de 2 mm ;
- Sollicitation : le porte échantillon se présente sous la forme d'un mors de compression ; cette pièce est constituée d'un plateau supérieur mobile (15 mm de diamètre) et d'un plateau inférieur fixe (15mm de diamètre) ; l'échantillon est placé entre ces deux plateaux ; la pièce mobile permet d'appliquer une contrainte définie sur l'échantillon, de 1 N ; l'ensemble est placé dans un four permettant de réaliser une rampe de température de l'ambiante à 180°C à 3°C/mn pendant laquelle on enregistre la déformation de l'échantillon ;
- Interprétation : les résultats se présentent sous forme de courbe de déformation de l'échantillon en fonction de la température ; on considère la température de ramollissement comme celle pour laquelle le matériau présente une diminution de son épaisseur de 10%.

### B Test de détermination d'une température de rupture sous fluage thermomécanique

Le principe et les conditions expérimentales utilisés pour cette mesure diffèrent de la précédente. En effet, la résistance au fluage thermomécanique est évaluée ici par la détermination d'une température à laquelle le fluage de l'éprouvette conduit à la rupture d'un film (température de rupture de l'échantillon).
- Appareillage : analyseur mécanique dynamique (DMA Q800) commercialisé par la société TA Instruments ;
- Echantillon : il se présente sous la forme d'un film de 4 mm de largeur et 0,5 mm d'épaisseur ;
- Sollicitation : le porte échantillon est constitué de 2 mors venant enserrer les extrémités de l'échantillon; la distance inter mors est de 12 à 13mm; le mors supérieur est mobile alors que le mors inférieur est fixe ; le mors mobile permet d'appliquer un effort d'1 N sur l'échantillon; le tout est placé dans un four permettant de réaliser une rampe de température de l'ambiante à 180°C (3°C/min) pendant laquelle on enregistre la déformation de l'échantillon ;
- Interprétation : Les résultats se présentent sous forme de courbe de déformation en fonction de la température ; l'échantillon étant soumis à un effort constant, sa déformation va varier de façon importante lors de son ramollissement ; ce phénomène de fluage précède la rupture du matériau, raison pour laquelle, on retient la température à laquelle se produit la rupture comme indicateur de la tenue thermique du matériau.

### C Tests d'étanchéité

Pour cette analyse, on a utilisé un perméamètre à parois rigides, placé dans une étuve (température de 60°C dans le cas présent), muni d'un capteur de pression relative (étalonné dans le domaine de 0 à 6 bars) et relié à un tube équipé d'une valve de gonflage. Le perméamètre peut recevoir des éprouvettes standard sous forme de disque (par exemple de diamètre 65 mm dans le cas présent) et d'épaisseur uniforme pouvant aller jusqu'à 1,5 mm (0,5 mm dans le cas présent). Le capteur de pression est connecté à une carte d'acquisition de données *National Instruments* (acquisition quatre voies analogiques 0-10 V) qui est reliée à un ordinateur réalisant une acquisition en continu avec une fréquence de 0,5 Hz (1 point toutes les deux secondes). Le coefficient de perméabilité (K) est mesuré à partir de la droite de régression linéaire donnant la pente α de la perte de pression à travers l'éprouvette testée en fonction du temps, après stabilisation du système c'est-à-dire obtention d'un régime stable au cours duquel la pression décroît linéairement en fonction du temps.

### II-2. Essais

### II-2-A. 1^{er} Essai

Le tableau 1 compare les températures de ramollissement d'une composition élastomère étanche à base de SIBS (SIBSTAR 102 T contenant 15 % massique de styrène) avec et sans addition de poly(2,6-diméthyl-1,4-phénylène-éther).

**Tableau 1**

| | Référence | A1 |
|---|---|---|
| SIBS - Sibstar102T® -KANEKA- (pce) | 100 | 100 |
| Huile PIB - H1200 -Ineos Oligomer- (pce) | 67 | 67 |
| Charge lamellaire - SYA41R® - YAMAGUSHI¹-% volumique (pce) | 10% (54 pce) | 10% (54 pce) |
| poly(2,6-diméthyl-1,4-phénylène-éther) - Xyron®S202A - ASAHI-KASEI - % massique par rapport aux blocs styrène du SIBS (pce) | 0 | 50% (7,5 pce) |
| Température de ramollissement (°C) | 122 | 140 |
| Température de ramollissement (base 100) | 100 | 115 |

| | | |
|---|---|---|
| ¹ La masse volumique de la charge lamellaire utilisée est : ρ=2,85g/cm³. | | |

Ce tableau montre que le fait d'utiliser 50% massique de Xyron® S202A par rapport au taux de styrène du SIBS permet d'améliorer la température de ramollissement de 15% et donc la tenue thermique.

### II-2-B. 2^{ème} Essai

Le tableau 2 compare les tenues thermiques appréciées par la température de rupture sous fluage de formulations étanches à base de SIBS (102T) avec et sans addition de Xyron® S202A.

**Tableau 2**

| | Référence | B1 | B2 |
|---|---|---|---|
| SIBS - Sibstar102T -KANEKA- (pce) | 100 | 100 | 100 |
| Huile PIB - H1200 -Ineos Oligomer - (pce) | 67 | 67 | 67 |
| Charge lamellaire - SYA41R® - YAMAGUSHI-% volumique (pce) | 10% (54 pce) | 10% (54 pce) | 10% (54 pce) |
| poly(2,6-diméthyl-1,4-phénylène-éther) - Xyron®S202A - ASAHI-KASEI-(% massique par rapport aux blocs styrène du SIBS) (pce) | 0 | 50% (7,5 pce) | 200% (30pce) |
| Température de rupture sous fluage (°C) | 41 | 51 | 59 |
| Température de rupture sous fluage (base 100) | 100 | 124 | 144 |

Le tableau 2 montre clairement que l'addition de 50% puis 200% massique de Xyron® S202A par rapport au taux de styrène du SIBS à la formulation améliore significativement la résistance au fluage thermomécanique et ce d'autant plus que la quantité introduite est importante.

### II-2-C. Tests d'étanchéité

Le tableau 3 présente les résultats de tests d'étanchéité (mesure du coefficient K de perméabilité de l'éprouvette) de compositions étanches à base de SIBS avec et sans ajout de poly(2,6-diméthyl-1,4-phénylène-éther).

**Tableau 3**

| | Réf1 | C1 | Réf2 | C2 |
|---|---|---|---|---|
| SIBS - Sibstar103T® - KANEKA-(pce) | 100 | 100 | 100 | 100 |
| Huile PIB - H1200 - Ineos Oligomer- (pce) | 100 | 100 | 67 | 67 |
| Charge lamellaire - SYA41R® - YAMAGUSHI-(% volumique) (pce) | 10% (69 pce) | 10% (69 pce) | 0% | 0% |
| poly(2,6-diméthyl-1,4-phénylène-éther) - Xyron® - ASAHI-KASEI-(% massique par rapport aux blocs styrène du SIBS) (pce) | 0 | 50% (7,5pce) | 0 | 200% (30pce) |
| K (10⁻¹⁷ m⁴.N⁻¹.s⁻¹) | 1,66 | 1,15 | 3,63 | 3,01 |
| K (base 100) | 100 | 144 | 100 | 121 |

L'introduction de 50% massique de Xyron® S202A par rapport au taux de styrène du SIBS (C1) permet d'améliorer significativement l'étanchéité d'une formulation chargée.

Il est à noter qu'en absence de charge lamellaire, le poly(2,6-diméthyl-1,4-phénylène-éther) (C2) améliore également l'étanchéité par rapport à la composition Réf 2.

Cette amélioration de la performance d'étanchéité des compositions élastomères à base de SIBS comportant du poly(2,6-diméthyl-1,4-phénylène-éther) est tout à fait inattendue.

## Revendications

1. Bandage pneumatique pourvu d'un couche élastomère étanche aux gaz de gonflage, ladite couche élastomère étanche comportant au moins un élastomère thermoplastique styrénique à bloc polyisobutylène, **caractérisé en ce que** ladite couche élastomère étanche comprend en plus un polyphénylène éther (« PPE ») et **en ce que** le taux pondéral de polyphénylène éther représente entre 0,05 et 5 fois le taux pondéral de styrène présent dans l'élastomère thermoplastique styrénique.

2. Bandage pneumatique selon la revendication 1, dans lequel le taux pondéral de polyphénylène éther représente entre 0,1 et 2 fois, et préférentiellement entre 0,2 et 1,5 fois le taux pondéral de styrène présent dans l'élastomère thermoplastique styrénique.

3. Bandage pneumatique selon l'une des revendications 1 et 2, dans lequel le polyphénylène éther a une température de transition vitreuse supérieure à 150°C, de préférence supérieure à 180°C.

4. Bandage pneumatique selon la revendication 3, dans lequel le polyphénylène éther est choisi dans le groupe constitué par les poly(2,6-diméthyl-1,4-phénylène-éther), poly(2,6-diméthyl-co-2,3,6-triméthyl-1,4- phénylène-éther), poly-(2,3,6-triméthyl-1,4- phénylène-éther), poly(2,6-diéthyl-1,4- phénylène-éther), poly(2-méthyl-6-éthyl-1,4- phénylène-éther), poly(2-méthyl-6-propyl- 1,4-phénylène-éther), poly-(2,6-dipropyl-1,4- phénylène-éther), poly(2-éthyl-6-propyl-1,4- phénylène-éther), poly(2,6-dilauryl-1,4- phénylène-éther), poly(2,6-diphényl-1,4- phénylène-éther), poly(2,6-diméthoxy-1,4- phénylène-éther), poly(1,6-diéthoxy-1,4- phénylène-éther), poly(2-méthoxy-6-éthoxy- 1,4-phénylène-éther), poly(2-éthyl-6- stéaryloxy-1,4-phénylène-éther), poly(2,6- dichloro-1,4-phénylène-éther), poly(2-méthyl- 6-phényl-1,4-phénylène-éther), poly(2- éthoxy-1,4-phénylène-éther), poly(2-chloro- 1,4-phénylène-éther), poly(2,6-dibromo-1,4- phénylène-éther), poly(3-bromo-2,6-diméthyl- 1,4-phénylène-éther), leurs copolymères respectifs, et les mélanges de ces homopolymères ou copolymères.

5. Bandage pneumatique selon la revendication 4, dans lequel le polyphénylène éther est le poly(2,6-diméthyl-1,4-phénylène-éther).

6. Bandage pneumatique selon l'une des revendications 1 à 5, dans lequel le monomère styrénique de l'élastomère thermoplastique styrénique à bloc polyisobutylène est choisi dans le groupe des styrène, méthylstyrènes, para-tertio-butylstyrène, chlorostyrènes, bromostyrènes, fluorostyrènes, para-hydroxy-styrène.

7. Bandage pneumatique selon la revendication 6, dans lequel l'élastomère thermoplastique styrénique à bloc polyisobutylène est choisi dans le groupe des copolymères dibloc styrène/ isobutylène (« SIB ») et des copolymères tribloc styrène/ isobutylène/ styrène (« SIBS »).

8. Bandage pneumatique selon la revendication 7, dans lequel l'élastomère thermoplastique styrénique à bloc polyisobutylène est un styrène/ isobutylène/ styrène (« SIBS »).

9. Bandage pneumatique selon l'une quelconque des revendications précédentes, dans lequel l'élastomère thermoplastique à bloc polyisobutylène est à un taux pondéral majoritaire relativement à l'ensemble des élastomères de la couche étanche.

10. Bandage pneumatique selon l'une quelconque des revendications 1 à 8, dans lequel l'élastomère thermoplastique styrénique à bloc polyisobutylène est le seul élastomère de la couche étanche.

11. Bandage pneumatique selon l'une quelconque des revendications précédentes, dans lequel la couche étanche comporte en plus une huile d'extension à un taux compris entre 5 et 150 pce.

12. Bandage pneumatique selon la revendication 11, dans lequel l'huile d'extension est du polybutène et préférentiellement du polyisobutylène.

13. Bandage pneumatique selon l'une quelconque des revendications précédentes, dans lequel la couche étanche comporte en plus une charge lamellaire, de préférence à un taux compris entre 2 % et 30 % volumique.

## Patentansprüche

1. Luftreifen, der mit einer aufpumpgasdichten Elastomerschicht versehen ist, wobei die dichte Elastomerschicht mindestens ein thermoplastisches Styrolelastomer mit einem Polyisobutylenblock umfasst, **dadurch gekennzeichnet, dass** die dichte Elastomerschicht außerdem einen Polyphenylenether ("PPE") umfasst und dass der Gewichtsanteil von Polyphenylenether zwischen dem 0,05- und 5-Fachen des Gewichtsanteils von Styrol in dem thermoplastischen Styrolelastomer liegt.

2. Luftreifen nach Anspruch 1, wobei der Gewichtsanteil von Polyphenylenether zwischen dem 0,1- und 2-Fachen und vorzugsweise zwischen dem 0,2- und 1,5-Fachen des Gewichtsanteils von Styrol in dem thermoplastischen Styrolelastomer liegt.

3. Luftreifen nach einem der Ansprüche 1 und 2, wobei der Polyphenylenether eine Glasübergangstemperatur von mehr als 150 °C, vorzugsweise von mehr als 180 °C, aufweist.

4. Luftreifen nach Anspruch 3, wobei der Polyphenylenether aus der Gruppe bestehend aus Poly(2,6-dimethyl-1,4-phenylenether), Poly(2,6-dimethyl-co-2,3,6-trimethyl-1,4-phenylenether), Poly(2,3,6-trimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly-(2,6-dipropyl-1,4-phenylen-ether), Poly(2-ethyl-6-propyl-1,4-phenylenether), Poly(2,6-dilauryl-1,4-phenylenether), Poly(2,6-diphenyl-1,4-phenylenether), Poly(2,6-dimethoxy-1,4-phenylenether), Poly(1,6-diethoxy-1,4-phenylenether), Poly(2-methoxy-6-ethoxy-1,4-phenylenether), Poly(2-ethyl-6-stearyloxy-1,4-phenylenether), Poly(2,6-dichlor-1,4-phenylen-ether), Poly(2-methyl-6-phenyl-1,4-phenylenether), Poly(2-ethoxy-1,4-phenylenether), Poly(2-chlor-1,4-phenylenether), Poly(2,6-dibrom-1,4-phenylen-ether), Poly(3-brom-2,6-dimethyl-1,4-phenylen-ether), deren jeweiligen Copolymeren und den Mischungen dieser Homopolymere oder Copolymere ausgewählt ist.

5. Luftreifen nach Anspruch 4, wobei es sich bei dem Polyphenylenether um Poly(2,6-dimethyl-1,4-phenylenether) handelt.

6. Luftreifen nach einem der Ansprüche 1 bis 5, wobei das Styrolmonomer des thermoplastischen Styrolelastomers mit einem Polyisobutylenblock aus der Gruppe bestehend aus Styrol, Methylstyrolen, paratert-Butylstyrol, Chlorstyrolen, Bromstyrolen, Fluorstyrolen und para-Hydroxystyrol ausgewählt ist.

7. Luftreifen nach Anspruch 6, wobei das thermoplastische Styrolelastomer mit einem Polyisobutylenblock aus der Gruppe bestehend aus Styrol/Isobutylen-Diblockcopolymeren ("SIB") und Styrol/Isobutylen/Styrol-Triblockcopolymeren ("SIBS") ausgewählt ist.

8. Luftreifen nach Anspruch 7, wobei es sich bei dem thermoplastischen Styrolelastomer mit einem Polyisobutylenblock um ein Styrol/Isobutylen/Styrol ("SIBS") handelt.

9. Luftreifen nach einem der vorhergehenden Ansprüche, wobei das thermoplastische Styrolelastomer mit einem Polyisobutylenblock in einem überwiegenden Gewichtsanteil in Bezug auf alle Elastomere der dichten Schicht vorliegt.

10. Luftreifen nach einem der Ansprüche 1 bis 8, wobei es sich bei dem thermoplastischen Styrolelastomer mit einem Polyisobutylenblock um das einzige Elastomer der dichten Schicht handelt.

11. Luftreifen nach einem der vorhergehenden Ansprüche, wobei die dichte Schicht außerdem ein Strecköl in einem Gehalt zwischen 5 und 150 phe umfasst.

12. Luftreifen nach Anspruch 11, wobei es sich bei dem Strecköl um Polybuten und vorzugsweise Polyisobuten handelt.

13. Luftreifen nach einem der vorhergehenden Ansprüche, wobei die dichte Schicht außerdem einen plättchenförmigen Füllstoff, vorzugsweise in einem Gehalt zwischen 2 und 30 Vol.-%, umfasst.

## Claims

1. Pneumatic tyre provided with an elastomer layer which is airtight to the inflation gases, the said airtight elastomer layer comprising at least one styrene thermoplastic elastomer comprising a polyisobutylene block, **characterized in that** the said airtight elastomer layer additionally comprises a polyphenylene ether ("PPE") and **in that** the content by weight of polyphenylene ether represents between 0.05 and 5 times the content by weight of styrene present in the styrene thermoplastic elastomer.

2. Pneumatic tyre according to Claim 1, in which the content by weight of polyphenylene ether represents between 0.1 and 2 times and preferably between 0.2 and 1.5 times the content by weight of styrene present in the styrene thermoplastic elastomer.

3. Pneumatic tyre according to either of Claims 1 and 2, in which the polyphenylene ether has a glass transition temperature of greater than 150°C, preferably of greater than 180°C.

4. Pneumatic tyre according to Claim 3, in which the polyphenylene ether is chosen from the group consisting of poly(2,6-dimethyl-1,4-phenylene ether), poly(2,6-dimethyl-co-2,3,6-trimethyl-1,4-phenylene ether), poly(2,3,6-trimethyl-1,4-phenylene ether), poly(2,6-diethyl-1,4-phenylene ether), poly(2-methyl-6-ethyl-1,4-phenylene ether), poly(2-methyl-6-propyl-1,4-phenylene ether), poly-(2,6-dipropyl-1,4- phenylene ether), poly(2-ethyl-6-propyl-1,4-phenylene ether), poly(2,6-dilauryl-1,4- phenylene ether), poly(2,6-diphenyl-1,4-phenylene ether), poly(2,6-dimethoxy-1,4-phenylene ether), poly(1,6-diethoxy-1,4-phenylene ether), poly(2-methoxy-6-ethoxy-1,4-phenylene ether), poly(2-ethyl-6-stearyloxy-1,4-phenylene ether), poly(2,6-dichloro-1,4-phenylene ether), poly(2-methyl-6-phenyl-1,4-phenylene ether), poly(2-ethoxy-1,4-phenylene ether), poly(2-chloro-1,4-phenylene ether), poly(2,6-dibromo-1,4-phenylene ether), poly(3-bromo-2,6-dimethyl-1,4-phenylene ether), their respective copolymers, and the blends of these homopolymers or copolymers.

5. Pneumatic tyre according to Claim 4, in which the polyphenylene ether is poly(2,6-dimethyl-1,4-phenylene ether).

6. Pneumatic tyre according to one of Claims 1 to 5, in which the styrene monomer of the styrene thermoplastic elastomer comprising a polyisobutylene block is chosen from the group consisting of styrene, methylstyrenes, para-(tert-butyl)styrene, chlorostyrenes, bromostyrenes, fluorostyrenes and para-hydroxystyrene.

7. Pneumatic tyre according to Claim 6, in which the styrene thermoplastic elastomer comprising a polyisobutylene block is chosen from the group consisting of styrene/isobutylene diblock copolymers ("SIBs") and styrene/isobutylene/styrene triblock copolymers ("SIBSs").

8. Pneumatic tyre according to Claim 7, in which the styrene thermoplastic elastomer comprising a polyisobutylene block is a styrene/isobutylene/styrene ("SIBS") .

9. Pneumatic tyre according to any one of the preceding claims, in which the thermoplastic elastomer comprising a polyisobutylene block is at a predominant content by weight relative to all the elastomers of the airtight layer.

10. Pneumatic tyre according to any one of Claims 1 to 8, in which the styrene thermoplastic elastomer comprising a polyisobutylene block is the only elastomer of the airtight layer.

11. Pneumatic tyre according to any one of the preceding claims, in which the airtight layer additionally comprises an extending oil at a content of between 5 and 150 phr.

12. Pneumatic tyre according to Claim 11, in which the extending oil is polybutene and preferably polyisobutylene.

13. Pneumatic tyre according to any one of the preceding claims, in which the airtight layer additionally comprises a platy filler, preferably at a content of between 2% and 30% by volume.
